# EUROPEAN PATENT SPECIFICATION

(11) **EP 4 243 531 B1**
(45) Date of publication and mention of the grant of the patent: **25.12.2024**
(21) Application number: 21916731.9
(22) Date of filing: 06.01.2021
(51) Int. Cl.: H04W 76/27

(54) **SIGNALING SENDING METHOD, CONTEXT MIGRATION METHOD OF TERMINAL DEVICE, AND NETWORK DEVICES**
SIGNALISIERUNGSSENDEVERFAHREN, KONTEXTMIGRATIONSVERFAHREN FÜR ENDGERÄTEVORRICHTUNG UND NETZWERKVORRICHTUNGEN
PROCÉDÉ D'ENVOI DE SIGNALISATION, PROCÉDÉ DE MIGRATION DE CONTEXTE DE DISPOSITIF TERMINAL, ET DISPOSITIFS DE RÉSEAU

(43) Date of publication of application: 13.09.2023
(73) Proprietor: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); WANG, Shukun, Dongguan, Guangdong 523860 (CN)
(74) Representative: Ipside
(86) International application number: PCT/CN2021/070403
(87) International publication number: WO 2022/147673

(56) References cited:
- WO-A1-2019/184483
- WO-A1-2020/139509
- CN-A- 110 958 688
- US-A1- 2019 394 823
- SAMSUNG: "Random Access based Small Data Transmission - Signaling Flow", vol. RAN WG2, no. Electronic; 20200817 - 20200828, 6 August 2020 (2020-08-06), XP052359893, Retrieved from the Internet <URL:https://ftp.3gpp.org/tsg_ran/WG2_RL2/TSGR2_111-e/Docs/R2-2006772.zip R2-2006772_Random Access based Small Data Transmission - Signaling Flow.doc> [retrieved on 20200806]
- HUAWEI ET AL: "Discussion about security aspects for small data transmission", vol. RAN WG2, no. Online; 20201102 - 20201113, 23 October 2020 (2020-10-23), XP052362976, Retrieved from the Internet <URL:https://ftp.3gpp.org/tsg_ran/WG2_RL2/TSGR2_112-e/Docs/R2-2009931.zip R2-2009931 Discussion on the security aspects for SDT.docx> [retrieved on 20201023]

## Description

### TECHNICAL FIELD

This disclosure relates to the field of communication, and particularly to a method for signaling transmission, a method for context migration of a terminal device, and network devices.

### BACKGROUND

In the fifth generation (5G) new radio (NR) system, radio resource control (RRC) states of a user equipment (UE) include three types, namely: an RRC idle state (RRC_IDLE), an RRC inactive state (RRC_INACTIVE), and an RRC connected state (RRC_CONNECTED). The inactive state is newly introduced in the 5G system from the perspective of power saving. For the UE in the inactive state, radio bearers and all radio resources may be released, but UE context for access is retained at the UE side and a base station side for quick RRC connection resume. A network usually keeps a UE with infrequent data transmission in an inactive state. Before Rel-16, the UE in the inactive state does not support data transmission. When message original (MO) or mobile terminate (MT) data arrives, connection needs to be resumed for the UE, and the UE resumes to the inactive state after data transmission. For a UE with small amount of data and low transmission frequency, such a transmission mechanism may cause unnecessary power consumption and signaling overhead. Therefore, Rel-17 sets up a project to carry out research on small data transmission (SDT) in the inactive state. According to the research conclusion, in the scenario where SDT is performed after cell reselection, UE context can be retained in a source base station or can be migrated from the source base station to a target base station. Currently, the source base station cannot obtain auxiliary information used for the source base station to determine whether to perform UE context migration.
Related technologies are known from WO 2020/139509A1 and 3GPP DRAFT, R2-2006772.

### SUMMARY

Implementations of the disclosure provide a method for signaling transmission, a method for context migration of a terminal device, and network devices.

The invention is defined by the appended independent claims.

### BRIEF DESCRIPTION OF THE DRAWINGS

FIG. 1 is a schematic diagram of an application scenario in implementations of the disclosure.
FIG. 2 is a schematic flow chart of a method 200 for signaling transmission in implementations of the disclosure.
FIG. 3 is a schematic flow chart of an implementation manner 300 in implementation 1 of the disclosure.
FIG. 4 is a schematic flow chart of an implementation manner 400 in implementation 2 of the disclosure.
FIG. 5 is a schematic flow chart of an implementation manner 500 in which a source base station determines whether to perform user equipment (UE) context migration in implementations of the disclosure.
FIG. 6 is a flow chart of a method 600 for UE context migration in implementations of the disclosure.
FIG. 7 is a schematic structural diagram of a first network device 700 in implementations of the disclosure.
FIG. 8 is a schematic structural diagram of a second network device 800 in implementations of the disclosure.
FIG. 9 is a schematic structural diagram of a network device 900 in implementations of the disclosure.
FIG. 10 is a schematic structural diagram of a chip 1000 in implementations of the disclosure.

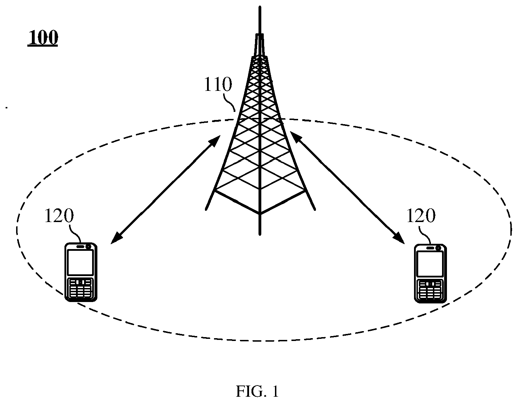

Figures 1 and 3-10 and their description are not in accordance with all aspects of the invention as defined in the independent claims. They are therefore present for illustration purposes or to highlight specific aspects or features of the claims.

### DETAILED DESCRIPTION

The following will describe technical solutions in implementations of the disclosure in conjunction with accompanying drawings in the implementations of the disclosure.

It is to be noted that the terms "first", "second" and the like in the description, claims and the above accompanying drawings of the implementations of the disclosure are used to distinguish similar objects, and not necessarily used to describe a specific order or sequence order. The objects described by "first", "second" and the like may be the same or different.

The technical solutions in the implementations of the disclosure can be applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advance long term evolution (LTE-A) system, a new radio (NR) system, an evolution system of the NR system, an LTE-based access to unlicensed spectrum (LTE-U) system, an NR-based access to unlicensed spectrum (NR-U) system, a universal mobile telecommunication system (UMTS), a wireless local area network (WLAN), a wireless fidelity (WiFi), a fifth-generation (5G) system, or other communication systems.

Generally, a conventional communication system supports a limited number of connections and therefore is easy to implement. However, with development of the communication technology, the mobile communication system can not only support conventional communication, but also support, for example, device to device (D2D) communication, machine to machine (M2M) communication, machine type communication (MTC), vehicle to vehicle (V2V) communication. Implementations of the disclosure also can be applied to these communication systems.

Alternatively, a communication system in implementations of the disclosure can be applicable to a carrier aggregation (CA) scenario, a dual connectivity (DC) scenario, and a standalone (SA) scenario.

A spectrum applied is not limited in implementations of the disclosure. For example, implementations of the disclosure can be applied to a licensed spectrum and also can be applied to an unlicensed spectrum.

In the implementations of the disclosure, each implementation is illustrated in conjunction with a network device and a terminal device. The terminal device may also be called a user equipment (UE), an access terminal, a subscriber unit, a subscriber station, a mobile station, a mobile platform, a remote station, a remote terminal, a mobile device, a user terminal, a terminal, a wireless communication device, a user agent, a user apparatus, etc. The terminal device may also be a station (ST) in the WLAN, a cellular radio telephone, a cordless telephone, a session initiation protocol (SIP) telephone, a wireless local loop (WLL) station, a personal digital assistant (PDA). The terminal device may also be a device with wireless communication functions such as a handheld device, a computing device, other processing devices coupled with a wireless modem, an in-vehicle device, a wearable device, or a terminal device in a next-generation communication system such as a terminal device in an NR network, a terminal device in a future evolved public land mobile network (PLMN), etc.

As an example but not limitation, in the implementations of the disclosure, the terminal device may also be a wearable device. The wearable device can also be called a wearable smart device, which is a collective name of wearable devices intelligently designed and developed by applying a wearable technology to daily wear, such as glasses, gloves, watches, clothing, shoes, etc. The wearable device is a portable device that can be worn directly on the body or integrated into clothing or accessories of a user. The wearable device not only is a hardware device but also can realize powerful functions through software support, data interaction, and cloud interaction. Broadly speaking, the wearable smart device includes a device that has full functions and a large size and can realize all or part of functions without relying on a smart phone, e.g., a smart watch, smart glasses, or the like, and includes a device that only focuses on a certain application function and needs to be used with other devices such as a smart phone, e.g., all kinds of smart bracelets and smart jewelry for physical sign monitoring or the like.

In the implementations of the disclosure, the network device may be a device that is used to communicate with a mobile device. The network device may be an access point (AP) in the WLAN, a base transceiver station (BTS) in the GSM or CDMA system, or a NodeB (NB) in the WCDMA system. Alternatively, the network device may be an evolutional NodeB (eNB or eNodeB), a relay station, an AP, an in-vehicle device, or a wearable device in the LTE, a generation NodeB (gNB) in the NR network, a network device in the future evolved PLMN, or the like.

In the implementations of the disclosure, the network device can provide services for a cell, and the terminal device can communicate with the network device through transmission resources (e.g., frequency-domain resources or spectrum resources) for the cell. The cell may correspond to the network device (e.g., a base station). The cell may belong to a macro base station or a base station corresponding to a small cell. The small cell may include a metro cell, a micro cell, a pico cell, a femto cell, or the like. These small cells have features of small coverage ranges and low transmission power and are suitable for providing high-speed data transmission services.

FIG. 1 exemplarily illustrates one network device 110 and two terminal devices 120. Optionally, a wireless communication system 100 may include multiple network devices 110, and the other number of terminal devices 120 may be included in a coverage range of each network device 110, which will not be limited in the implementations of the disclosure. The implementations of the disclosure can be applied to one terminal device 120 and one network device 110, and can also be applied to one terminal device 120 and another terminal device 120.

Optionally, the communication system 100 may further include a mobility management entity (MME), an access and mobility management function (AMF) or other network entities, which is not be limited in implementations of the disclosure.

It can be understood that, the terms "system" and "network" in this disclosure are often used interchangeably. The term "and/or" in this disclosure is simply an illustration of an association relationship of associated objects, indicating that three relationships may exist, for example, A and/or B, which may indicate the existence of A alone, A and B together, and B alone. In addition, the character "/" in this disclosure generally indicates that associated objects are in an "or" relationship.

It can be understood that, the "indication" referred to in the implementations of the disclosure may be a direct indication, an indirect indication, or an indication indicating an associated relation. For example, A indicates B, which can mean that A indicates B directly, e.g., B can be obtained through A, can also mean that A indicates B indirectly, e.g., A indicates C, and B can be obtained through C, or can further mean that A and B have an associated relation.

In illustration of the implementations of the disclosure, the term "correspondence" may represent a direct correspondence or indirect correspondence between the two, may also represent an associated relation between the two, or may further represent a relation of indicating and being indicated, a relation of configuring and being configured, or other relations.

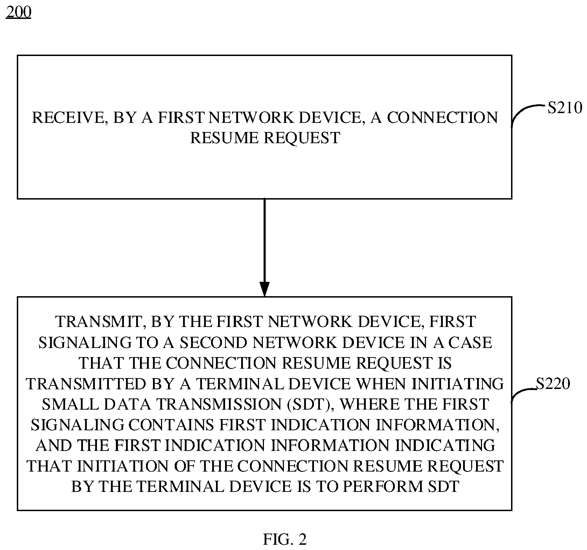

The implementations of the disclosure can be applied to the scenario where the UE performs small data transmission (SDT) after cell reselection. FIG. 2 is a schematic flow chart of a method 200 for signaling transmission according to the implementations of the disclosure. The method may optionally be applied to the system illustrated in FIG. 1, but there is no limitation in this regard. The method includes at least part of the following.

At S210, a first network device receives a connection resume request.

At S220, in a case that the connection resume request is transmitted by a terminal device when initiating SDT, the first network device transmits first signaling to a second network device, where the first signaling contains first indication information, and the first indication information indicates that initiation of the connection resume request by the terminal device is to perform SDT.

The first network device is a target base station after the terminal device performs cell reselection, and the second network device is a source base station before the terminal device performs cell reselection.

In the above operation at S210, the first network device receives a first message from the terminal device, where the first message contains the connection resume request. Optionally, the connection resume request contains an inactive-radio network temporary identity (I-RNTI), and the first network device can determine the second network device according to the I-RNTI.

It can be seen that in the implementations of the disclosure, the target base station carries the first indication information, which is conducive for the source base station to determine whether to perform UE context migration.

Optionally, the first indication information may be carried in a radio resource control (RRC) resume cause information element (IE). Alternatively, the first indication information may be carried in a first IE.

The RRC resume cause IE is an IE defined in the related art. The IE may be carried in a message such as an RRC resume request (RRCResumeRequest) message, an RRC resume request 1 (RRCResumeRequest1) message, and an RRC connection resume request (RRCConnectionResumeRequest) message.

The first IE may be a newly defined IE.

The first signaling further contains first list information. The first list information contains an encryption and/or integrity protection algorithm supported by the first network device (such as the target base station).

The first list information is used as another auxiliary information used to help the source base station determine whether to perform UE context migration. In the following implementations, a specific manner in which the source base station determines whether to perform UE context migration according to the first indication information and the first list information will be introduced in detail.

In addition to the first indication information and the first list information, the first signaling may also contain other information in a retrieve UE context request, such as at least one of: a context identifier (ID) of a terminal device (UE context ID) or an ID of a cell corresponding to the first network device (cell ID).

Specific implementations are given below to introduce in detail the method for signaling transmission and examples in which the second network device (such as the source base station) determines whether to perform UE context migration according to received information. In the following implementations, the first network device is specifically referred to as the target base station, and the second network device is specifically referred to as the source base station.

### Implementation 1, not according to the invention as claimed

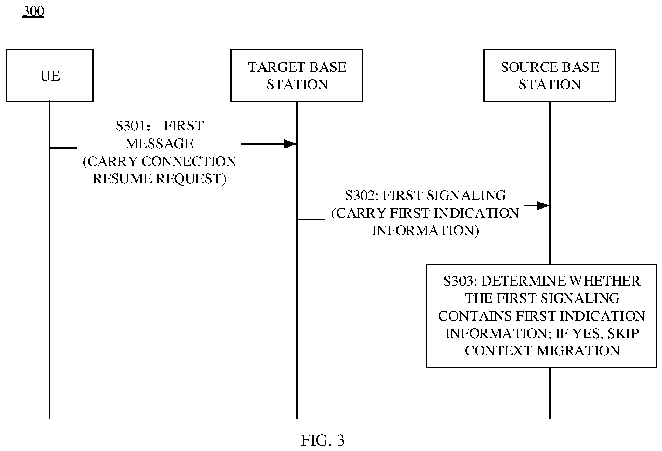

FIG. 3 is a schematic flow chart of an implementation manner 300 of implementation 1 of the disclosure. As illustrated in FIG. 3, implementation 1 includes the following.

At S301, a UE initiates an SDT in a target cell, and a target base station receives a first message transmitted by the UE, where the first message contains at least a connection resume request.

At S302, the target base station addresses a source base station according to an I-RNTI in the connection resume request, and transmits first signaling to the source base station, where the first signaling contains at least the following information.
(1) First indication information: the first indication information is used to inform the source base station that initiation of the connection resume request by the UE is to perform SDT. Optionally, the first indication information may be carried in an RRC resume cause ID, or a new IE is introduced and used as the first indication information.
(2) Other information in a retrieve UE context request, such as a UE context ID, a cell ID, etc.

At S303, upon reception of the first signaling transmitted by the target base station, the source base station determines whether the first signaling contains the first indication information. If the first signaling contains the first indication information, the source base station skips UE context migration. If the first signaling does not contain the first indication information, the source base station determines whether to perform UE context migration in combination with other factors.

In the implementation, the target base station provides the source base station with the first indication information to help the source base station determine whether to perform UE context migration according to the first indication information.

### Implementation 2, not according to the invention as claimed

In the implementation, a target base station provides a source base station with first indication information and first list information to help the source base station determine whether to perform UE context migration according to the first indication information and the first list information.

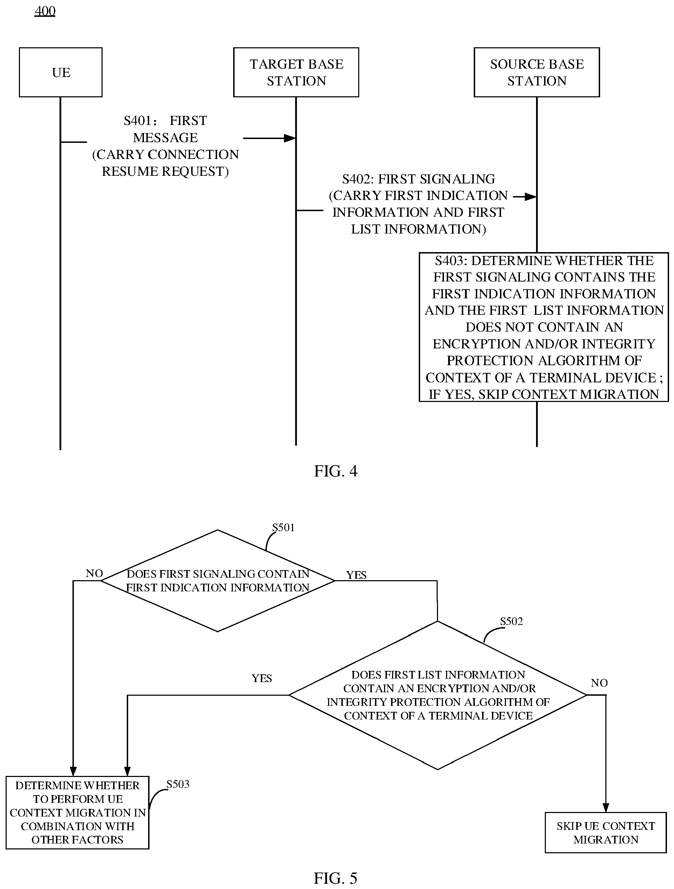

FIG. 4 is a schematic flow chart of an implementation manner 400 of implementation 2 of the disclosure. As illustrated in FIG. 4, implementation 2 includes the following.

At S401, a UE initiates an SDT in a target cell, and a target base station receives a first message transmitted by the UE, where the first message contains at least a connection resume request.

At S402, the target base station addresses a source base station according to an I-RNTI in the connection resume request, and transmits first signaling to the source base station, where the first signaling contains at least the following information.
(1) First indication information: the first indication information is used to inform the source base station that initiation of the connection resume request by the UE is to perform SDT. Optionally, the first indication information may be carried in an RRC resume cause ID, or a new IE is introduced and used as the first indication information.
(2) First list information: the first list information contains an encryption and/or integrity protection algorithm currently supported by the target base station.
(3) Other information in a retrieve UE context request, such as a UE context ID, a cell ID, etc.

At S403, upon reception of the first signaling transmitted by the target base station, the source base station determines whether the following conditions are satisfied: the first signaling contains the first indication information, and the first list information does not contain an encryption and/or integrity protection algorithm of context of a terminal device.

If the above two conditions are both satisfied, the source base station skips UE context migration. If at least one of the above two conditions is not satisfied, the source base station determines whether to perform UE context migration in combination with other factors.

The above two conditions can be determined synchronously, or determined one after the other.

For example, FIG. 5 is a schematic flow chart of an implementation manner 500 in which a source base station determines whether to perform UE context migration in implementations of the disclosure, not according to the invention as claimed. The implementation manner 500 includes the following.

At S501, the source base station determines whether first signaling contains first indication information. If the first signaling contains the first indication information, the source base station performs an operation at S502. If the first signaling does not contain the first indication information, the source base station performs an operation at S503.

At S502, the source base station determines whether the first list information contains an encryption and/or integrity protection algorithm of context of a terminal device. If the first list information does not contain the encryption and/or integrity protection algorithm of the context of the terminal device, the source base station skips UE context migration. If the first list information contains the encryption and/or integrity protection algorithm of the context of the terminal device, the source base station performs an operation at S503.

At S503, the source base station determines whether to perform UE context migration in combination with other factors.

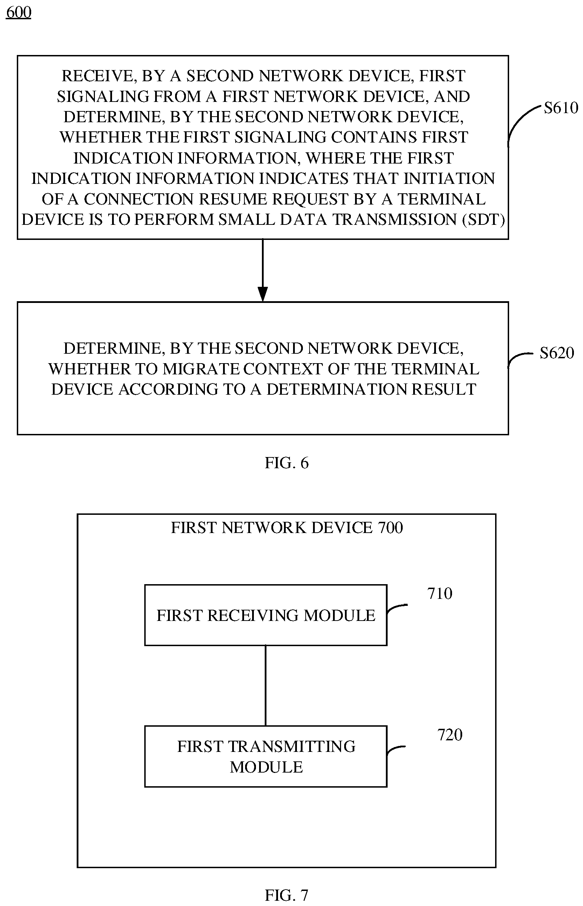

Implementations of the disclosure further provides a method for UE context migration. FIG. 6 is a flow chart of a method 600 for UE context migration, not according to the invention as claimed.

At S610, a second network device receives first signaling from a first network device, and determines whether the first signaling contains first indication information, where the first indication information indicates that initiation of a connection resume request by a terminal device is to perform SDT.

At S620, the second network device determines whether to migrate context of the terminal device according to a determination result.

The first network device may be a target base station after the terminal device performs cell reselection, and the second network device may be a source base station before the terminal device performs cell reselection.

Optionally, the operation at S620 may include that the second network device skips migration of the context of the terminal device on condition that the first signaling contains the first indication information. Further, the operation at S620 may include that the second network device determines whether to migrate the context of the terminal device according to a preset factor on condition that the first signaling does not contain the first indication information.

In some implementations, the first signaling contains first list information, where the first list information contains an encryption and/or integrity protection algorithm supported by the first network device. Correspondingly, the operation at S620 may include that the second network device skips migration of the context of the terminal device on condition that the following conditions are both satisfied: the first signaling contains the first indication information; and the first list information does not contain the encryption and/or integrity protection algorithm of the context of the terminal device.

Further, the operation at S620 may further include that the second network device determines whether to migrate the context of the terminal device according to a preset factor when at least one of the above conditions is not satisfied.

Optionally, the first indication information is carried in an RRC resume cause IE. Alternatively, the first indication is carried in a first IE.

Optionally, the first signaling further contains at least one of a context ID of the terminal device or an ID of a cell corresponding to the first network device.

It can be seen that in the case where the UE performs SDT after cell reselection, the target base station provides the source base station with auxiliary information, where the auxiliary information can help the source base station determine whether to perform UE context migration. Moreover, the implementations of the disclosure propose a specific manner in which the source base station determines whether to perform UE context migration. On condition that the source base station determines, according to the auxiliary information, that initiation of the connection resume request by the terminal device is for SDT, the source base station skips UE context migration. On condition that the target base station provides the source base station with the encryption and/or integrity protection algorithm supported by the target base station, and it is determined that initiation of the connection resume request by the terminal device is for SDT, the target base station further determines whether the encryption and/or integrity protection algorithm of UE context belongs to the encryption and/or integrity protection algorithm supported by the target base station. If the encryption and/or integrity protection algorithm of UE context does not belong to the encryption and/or integrity protection algorithm supported by the target base station, the source base station skips UE context migration.

Implementations of the disclosure further provide a first network device. FIG. 7 is a schematic structural diagram of a first network device 700, not according to the invention as claimed. The first network device 700 includes a first receiving module 710 and a first transmitting module 720. The first receiving module 710 is configured to receive a connection resume request. The first transmitting module 720 is configured to transmit first signaling to a second network device in a case that the connection resume request is transmitted by a terminal device when initiating SDT, where the first signaling contains first indication information, and the first indication information indicates that initiation of the connection resume request by the terminal device is to perform SDT.

The first network device may be a target base station after the terminal device performs cell reselection. The second network device may be a source base station before the terminal device performs cell reselection.

Optionally, the first signaling further contains first list information. The first list information contains an encryption and/or integrity protection algorithm supported by the first network device.

Optionally, the first indication information is carried in an RRC resume cause IE, or the first indication information is carried in a first IE.

Optionally, the first signaling further contains at least one of: a context ID of the terminal device or an ID of a cell corresponding to the first network device.

Optionally, the connection resume request contains an I-RNTI. The first transmitting module determines the second network device according to the I-RNTI.

Optionally, the first receiving module 710 is configured to receive a first message from the terminal device, where the first message contains the connection resume request.

It is to be understood that the above-mentioned and other operations and/or functions of the modules in the first network device according to the implementations of the disclosure are for realizing the corresponding process of the first network device in the method 200 in FIG. 2, and details will not be repeated herein for the purpose of brevity.

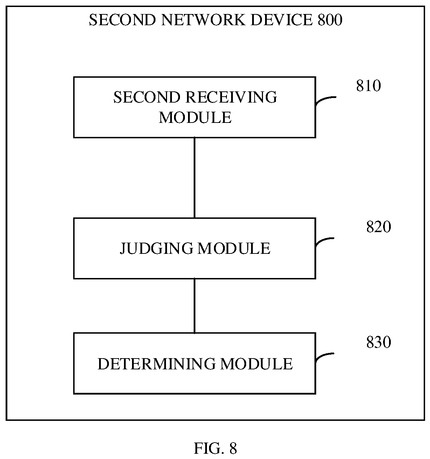

Implementations of the disclosure further provide a second network device. FIG. 8 is a schematic structural diagram of a second network device 800, not according to the invention as claimed. The second network device 800 includes a second receiving module 810, a judging module 820, and a determining module 830. The second receiving module 810 is configured to receive first signaling from a first network device. The judging module 820 is configured to judge whether the first signaling contains first indication information, where the first indication information indicates that initiation of a connection resume request by a terminal device is to perform SDT. The determining module 830 is configured to determine whether to migrate context of the terminal device according to a determination result.

The first network device may be a target base station after the terminal device performs cell reselection. The second network device may be a source base station before the terminal device performs cell reselection.

Optionally, the determining module 830 is configured to skip migration of the context of the terminal device on condition that the first signaling contains the first indication information.

Optionally, the determining module 830 is configured to determine whether to migrate the context of the terminal device according to a preset factor on condition that the first signaling does not contain the first indication information.

Optionally, the first signaling contains first list information, where the first list information contains an encryption and/or integrity protection algorithm supported by the first network device. Correspondingly, the determining module 830 is configured to skip migration of the context of the terminal device on condition that the following conditions are both satisfied: the first signaling contains the first indication information, and the first list information does not contain an encryption and/or integrity protection algorithm of the context of the terminal device.

Optionally, the determining module 830 is further configured to determine whether to migrate the context of the terminal device according to a preset factor when at least one of the above conditions is not satisfied.

Optionally, the first indication information is carried in an RRC resume cause IE, or the first indication information is carried in a first IE.

Optionally, the first signaling further contains at least one of a context ID of the terminal device or an ID of a cell corresponding to the first network device.

It is to be understood that the above-mentioned and other operations and/or functions of the modules in the second network device according to the implementations of the disclosure are for realizing the corresponding process of the second network device in the method 600 in FIG. 6, and details will not be repeated herein for the purpose of brevity.

It is to be noted that the functions of the modules (sub-modules, units, components, etc.) in the first network device 700 and the second network device 800 of the implementations of the disclosure may be implemented by different modules (sub-modules, units, components, etc.) or by the same module (submodule, unit, component, etc.). In addition, the transmitting module and the receiving module in the implementations of the disclosure can be realized by a transceiver of a device, and some or all of the other modules can be realized by a processor of the device.

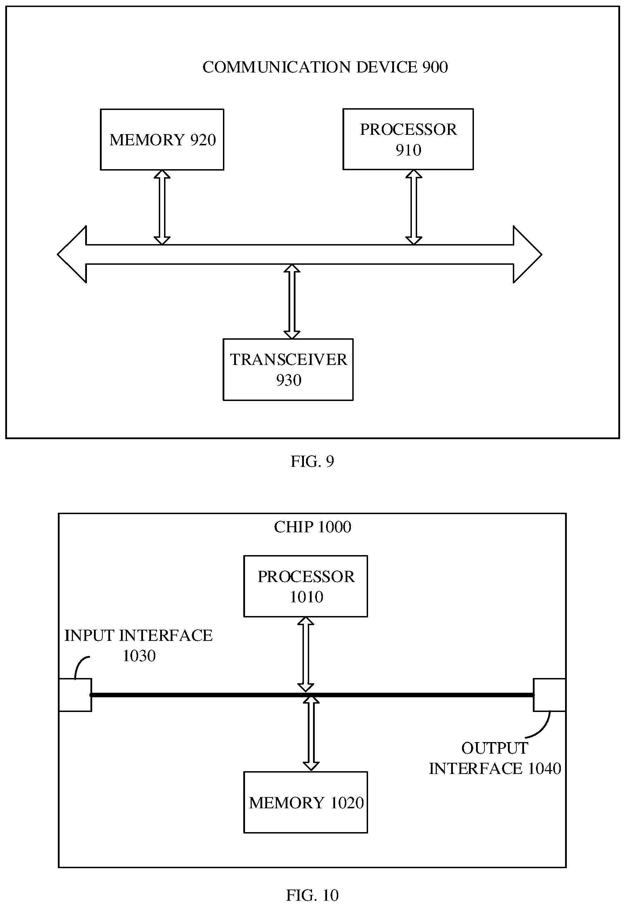

FIG. 9 is a schematic structural diagram of a network device 900, not according to the invention as claimed. The communication device 900 illustrated in FIG. 9 includes a processor 910, and the processor 910 can invoke and run a computer program in a memory to realize the methods in the implementations of the disclosure.

Optionally, as illustrated in FIG. 9, the communication device 900 may further include a memory 920. The processor 910 can invoke and run the computer program in the memory 920 to realize the methods in the implementations of the disclosure.

The memory 920 may be independent of the processor 910, or may be integrated in the processor 910.

Optionally, as illustrated in FIG. 9, the communication device 900 may further include a transceiver 930, and the processor 910 can control the transceiver 930 to communicate with other devices, specifically, to send information or data to other devices, or receive other information or data sent by the device.

The transceiver 930 may include a transmitter and a receiver. The transceiver 930 may further include antennas, and the number of antennas may be one or more.

Optionally, the communication device 900 may be the first network device of the implementations of the disclosure, and the communication device 900 may implement the corresponding process implemented by the first network device in each method of the implementations of the disclosure, which will not be repeated herein for the sake of brevity.

Optionally, the communication device 900 may be the second network device of the implementations of the disclosure, and the communication device 900 may implement the corresponding process implemented by the second network device in each method of the implementations of the disclosure, which will not be repeated herein for the sake of brevity.

FIG. 10 is a schematic structural diagram of a chip 1000, not according to the invention as claimed. The chip 1000 illustrated in FIG. 10 includes a processor 1010, and the processor 1010 can invoke and run a computer program in a memory to realize the methods in the implementations of the disclosure.

Optionally, as illustrated in FIG. 10, the chip 1000 may further include a memory 1020. The processor 1010 can invoke and run the computer program in the memory 1020 to realize the methods in the implementations of the disclosure.

The memory 1020 may be independent of the processor 1010, or may be integrated in the processor 1010.

Optionally, the chip 1000 may also include an input interface 1030. The processor 1010 can control the input interface 1030 to communicate with other devices or chips, specifically, can obtain information or data sent by other devices or chips.

Optionally, the chip 1000 may also include an output interface 1040. The processor 1010 can control the output interface 1040 to communicate with other devices or chips, specifically, can output information or data to other devices or chips.

Optionally, the chip can be applied to the first terminal device in the implementations of the disclosure, and the chip can implement the corresponding process implemented by the first network device in the various methods of the implementations of the disclosure, which will not be repeated herein for the sake of brevity.

Optionally, the chip can be applied to the second network device in the implementations of the disclosure, and the chip can implement the corresponding process implemented by the second network device in the various methods of the implementations of the disclosure, which will not be repeated herein for the sake of brevity.

It is to be understood that the chip mentioned in the implementations of the disclosure may also be referred to as a system-level chip, a system chip, a chip system, a system-on-chip, etc.

The processor mentioned above may be a general-purpose processor, a digital signal processor (DSP), a field programmable gate array (FPGA), an application specific integrated circuit (ASIC), other programmable logic devices, a transistor logic device, a discrete hardware component, or the like. The general purpose processor mentioned above may be a microprocessor, any conventional processor, or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It is to be understood that the forging memory is illustrative and do not constitute limitation. For example, in the implementations of the disclosure, the memory may be a static RAME (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), and so on. That is to say, the memory of the implementations of the disclosure is intended to include, but is not limited to, these and any other suitable types of memory.

All or part of the above implementations can be implemented through software, hardware, firmware, or any other combination thereof. When implemented by software, all or part of the above implementations can be implemented in the form of a computer program product. The computer program product includes one or more computer instructions. When the computer instructions are loaded and executed on a computer, all or part of the operations or functions of the implementations of the disclosure are performed. The computer may be a general-purpose computer, a special-purpose computer, a computer network, or other programmable apparatuses. The computer instruction may be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fibre, a digital subscriber line (DSL), etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It is to be understood that, in various implementations described herein, the magnitude of a sequence number of each process does not mean an order of execution, and the order of execution of each process should be determined by its function and an internal logic and does not constitute any limitation to an implementation process of the implementations of the disclosure.

It will be evident to those skilled in the art that, for the sake of convenience and simplicity, in terms of the working process of the foregoing systems, apparatuses, and units, reference can be made to the corresponding process of the above method implementations, which will not be repeated herein.

The above is only the specific implementation manners of the disclosure, but the scope of protection of the disclosure is not limited thereto. Any person skilled in the field can easily think of changes or substitutions within the technical scope of the disclosure.

Therefore, the scope of protection of the disclosure should be subject to the scope of protection of the claims.

## Claims

1. A method for signaling transmission, comprising:
receiving (S210), by a first network device, a connection resume request, wherein the first network device is a target base station; and
transmitting (S220), by the first network device, first signaling to a second network device in a case that the connection resume request is transmitted by a terminal device when initiating small data transmission, SDT, wherein the second network device is a source base station, and the first signaling contains first indication information and first list information, wherein the first indication information indicates that initiation of the connection resume request by the terminal device is to perform SDT, the method being **characterized by** the first list information containing an encryption and/or integrity protection algorithm supported by the first network device, and the first indication information and the first list information being are used by the second network device to determine whether to perform user equipment, UE, context migration.

2. The method of claim 1, wherein
the first indication information is carried in a radio resource control, RRC, resume cause information element, IE; or
the first indication information is carried in a first IE.

3. The method of any one of claims 1 to 2, wherein the first signaling further contains at least one of:
a context identifier, ID, of the terminal device; or
an ID of a cell corresponding to the first network device.

4. The method of any one of claims 1 to 3, wherein the connection resume request contains an inactive-radio network temporary identity, I-RNTI; and
the first network device determines the second network device according to the I-RNTI.

5. The method of any one of claims 1 to 4, wherein receiving, by the first network device, the connection resume request, comprises:
receiving, by the first network device, a first message from the terminal device, wherein the first message contains the connection resume request.

6. A method for context migration of a terminal device, comprising:
receiving (S610), by a second network device, first signaling from a first network device, and determining, by the second network device, whether the first signaling contains first indication information and first list information, wherein the first network device is a target base station, the second network device is a source base station, the first indication information indicates that initiation of a connection resume request by the terminal device is to perform small data transmission, SDT, the method being **characterized by** the first list information containing an encryption and/or integrity protection algorithm supported by the first network device, and the first indication information and the first list information being used by the second network device to determine whether to perform user equipment, UE, context migration; and
determining (S620), by the second network device, whether to migrate context of the terminal device according to a determination result.

7. The method of claim 6, wherein determining, by the second network device, whether to migrate the context of the terminal device according to the determination result, comprises:
skipping, by the second network device, migration of the context of the terminal device on condition that the first signaling contains the first indication information.

8. The method of claim 6, wherein determining, by the second network device, whether to migrate the context of the terminal device according to the determination result, comprises:
determining, by the second network device, whether to migrate the context of the terminal device according to a preset factor on condition that the first signaling does not contain the first indication information.

9. The method of claim 6, wherein
determining, by the second network device, whether to migrate the context of the terminal device according to the determination result, comprises: skipping, by the second network device, migration of the context of the terminal device on condition that the following conditions are both satisfied:
the first signaling contains the first indication information; and
the first list information does not contain an encryption and/or integrity protection algorithm of the context of the terminal device.

10. The method of claim 9, wherein determining, by the second network device, whether to migrate the context of the terminal device according to the determination result, further comprises:
determining, by the second network device, whether to migrate the context of the terminal device according to a preset factor when at least one of the following conditions is not satisfied:
the first signaling contains the first indication information; and
the first list information does not contain the encryption and/or integrity protection algorithm of the context of the terminal device.

11. The method of any one of claims 6 to 10, wherein
the first indication information is carried in a radio resource control, RRC, resume cause information element, IE; or
the first indication information is carried in a first IE.

12. The method of any one of claims 6 to 11, wherein the first signaling further contains at least one of:
a context identifier, ID of the terminal device; or
an ID of a cell corresponding to the first network device.

13. A first network device (700), comprising:
a first receiving module (710) configured to receive a connection resume request, wherein the first network device is a target base station; and
a first transmitting module (720) configured to transmit first signaling to a second network device in a case that the connection resume request is transmitted by a terminal device when initiating small data transmission, SDT, wherein the second network device is a source base station, and the first signaling contains first indication information and first list information, wherein the first indication information indicates that initiation of the connection resume request by the terminal device is to perform SDT, the first list information contains an encryption and/or integrity protection algorithm supported by the first network device, and the first indication information and the first list information are used by the second network device to determine whether to perform user equipment, UE, context migration.

14. A second network device (800), comprising:
a second receiving module (810) configured to receive first signaling from a first network device, wherein the first network device is a target base station, and the second network device is a source base station;
a judging module (820) configured to judge whether the first signaling contains first indication information and first list information, wherein the first indication information indicates that initiation of a connection resume request by a terminal device is to perform small data transmission, SDT, the first list information contains an encryption and/or integrity protection algorithm supported by the first network device, and the first indication information and the first list information are used by the second network device to determine whether to perform user equipment, UE, context migration; and
a determining module (830) configured to determine whether to migrate context of the terminal device according to a determination result.

## Patentansprüche

1. Verfahren zur Signalisierungsübertragung, umfassend:
Empfangen (S210), durch eine erste Netzwerkvorrichtung, einer Verbindungsfortsetzungsanforderung, wobei die erste Netzwerkvorrichtung eine Zielbasisstation ist; und
Übertragen (S220), durch die erste Netzwerkvorrichtung, einer ersten Signalisierung an eine zweite Netzwerkvorrichtung in einem Fall, in dem die Verbindungsfortsetzungsanforderung durch eine Endgerätevorrichtung beim Initiieren einer Small Data Transmission, SDT, übertragen wird, wobei die zweite Netzwerkvorrichtung eine Quellbasisstation ist und die erste Signalisierung erste Angabeinformationen und erste Listeninformationen enthält, wobei die ersten Angabeinformationen angeben, dass eine Initiierung der Verbindungsfortsetzungsanforderung durch die Endgerätevorrichtung eine SDT durchführen soll, wobei das Verfahren **dadurch gekennzeichnet ist, dass** die ersten Listeninformationen einen durch die erste Netzwerkvorrichtung unterstützten Verschlüsselungs- und/oder Integritätsschutzalgorithmus enthalten und die ersten Angabeinformationen und die ersten Listeninformationen durch die zweite Netzwerkvorrichtung zum Bestimmen, ob eine Benutzerausrüstungskontextmigration, UE-Kontextmigration, durchgeführt werden soll, verwendet werden.

2. Verfahren nach Anspruch 1, wobei
die ersten Angabeinformationen in einem Funkressourcensteuerungs-Fortsetzungsgrund-Informationselement, RRC-Fortsetzungsgrund-IE, enthalten sind oder
die ersten Angabeinformationen in einem ersten IE enthalten sind.

3. Verfahren nach einem der Ansprüche 1 bis 2, wobei die erste Signalisierung ferner zumindest eines enthält von:
einem Kontextidentifikator, Kontext-ID, der Endgerätevorrichtung oder
einem ID einer Zelle, die der ersten Netzwerkvorrichtung entspricht.

4. Verfahren nach einem der Ansprüche 1 bis 3, wobei die Verbindungsfortsetzungsanforderung eine Inactive-Radio Network Temporary Identity, I-RNTI, enthält und
die erste Netzwerkvorrichtung die zweite Netzwerkvorrichtung gemäß der I-RNTI bestimmt.

5. Verfahren nach einem der Ansprüche 1 bis 4, wobei das Empfangen, durch die erste Netzwerkvorrichtung, der Verbindungsfortsetzungsanforderung umfasst:
Empfangen, durch die erste Netzwerkvorrichtung, einer ersten Nachricht von der Endgerätevorrichtung, wobei die erste Nachricht die Verbindungsfortsetzungsanforderung enthält.

6. Verfahren zur Kontextmigration einer Endgerätevorrichtung, umfassend:
Empfangen (S610), durch eine zweite Netzwerkvorrichtung, einer ersten Signalisierung von einer ersten Netzwerkvorrichtung und Bestimmen, durch die zweite Netzwerkvorrichtung, ob die erste Signalisierung erste Angabeinformationen und erste Listeninformationen enthält, wobei die erste Netzwerkvorrichtung eine Zielbasisstation ist, die zweite Netzwerkvorrichtung eine Quellbasisstation ist, die ersten Angabeinformationen angeben, dass eine Initiierung einer Verbindungsfortsetzungsanforderung durch die Endgerätevorrichtung eine Small Data Transmission, SDT, durchführen soll, wobei das Verfahren **dadurch gekennzeichnet ist, dass** die ersten Listeninformationen einen durch die erste Netzwerkvorrichtung unterstützten Verschlüsselungs- und/oder Integritätsschutzalgorithmus enthalten und die ersten Angabeinformationen und die ersten Listeninformationen durch die zweite Netzwerkvorrichtung zum Bestimmen, ob eine Benutzerausrüstungskontextmigration, UE-Kontextmigration, durchgeführt werden soll, verwendet werden; und
Bestimmen (S620), durch die zweite Netzwerkvorrichtung, ob Kontext der Endgerätevorrichtung gemäß einem Bestimmungsergebnis migriert werden soll.

7. Verfahren nach Anspruch 6, wobei das Bestimmen, durch die zweite Netzwerkvorrichtung, ob der Kontext der Endgerätevorrichtung gemäß dem Bestimmungsergebnis migriert werden soll, umfasst:
Nichtdurchführen, durch die zweite Netzwerkvorrichtung, einer Migration des Kontexts der Endgerätevorrichtung unter der Bedingung, dass die erste Signalisierung die ersten Angabeinformationen enthält.

8. Verfahren nach Anspruch 6, wobei das Bestimmen, durch die zweite Netzwerkvorrichtung, ob der Kontext der Endgerätevorrichtung gemäß dem Bestimmungsergebnis migriert werden soll, umfasst:
Bestimmen, durch die zweite Netzwerkvorrichtung, ob der Kontext der Endgerätevorrichtung gemäß einem vorgegebenen Faktor migriert werden soll, unter der Bedingung, dass die erste Signalisierung die ersten Angabeinformationen nicht enthält.

9. Verfahren nach Anspruch 6, wobei
das Bestimmen, durch die zweite Netzwerkvorrichtung, ob der Kontext der Endgerätevorrichtung gemäß dem Bestimmungsergebnis migriert werden soll, umfasst: Nichtdurchführen, durch die zweite Netzwerkvorrichtung, einer Migration des Kontexts der Endgerätevorrichtung unter der Bedingung, dass die folgenden Bedingungen beide erfüllt sind:
die erste Signalisierung enthält die ersten Angabeinformationen und
die ersten Listeninformationen enthalten nicht einen Verschlüsselungs- und/oder Integritätsschutzalgorithmus des Kontexts der Endgerätevorrichtung.

10. Verfahren nach Anspruch 9, wobei das Bestimmen, durch die zweite Netzwerkvorrichtung, ob der Kontext der Endgerätevorrichtung gemäß dem Bestimmungsergebnis migriert werden soll, ferner umfasst:
Bestimmen, durch die zweite Netzwerkvorrichtung, ob der Kontext der Endgerätevorrichtung gemäß einem vorgegebenen Faktor migriert werden soll, wenn zumindest eine der folgenden Bedingungen nicht erfüllt ist:
die erste Signalisierung enthält die ersten Angabeinformationen und
die ersten Listeninformationen enthalten nicht den Verschlüsselungs- und/oder Integritätsschutzalgorithmus des Kontexts der Endgerätevorrichtung.

11. Verfahren nach einem der Ansprüche 6 bis 10, wobei
die ersten Angabeinformationen in einem Funkressourcensteuerungs-Fortsetzungsgrund-Informationselement, RRC-Fortsetzungsgrund-IE, enthalten sind oder
die ersten Angabeinformationen in einem ersten IE enthalten sind.

12. Verfahren nach einem der Ansprüche 6 bis 11, wobei die erste Signalisierung ferner zumindest eines enthält von:
einem Kontextidentifikator, Kontext-ID, der Endgerätevorrichtung oder
einem ID einer Zelle, die der ersten Netzwerkvorrichtung entspricht.

13. Erste Netzwerkvorrichtung (700), umfassend:
ein erstes Empfangsmodul (710), das zum Empfangen einer Verbindungsfortsetzungsanforderung ausgelegt ist, wobei die erste Netzwerkvorrichtung eine Zielbasisstation ist; und
ein erstes Übertragungsmodul (720), das zum Übertragen einer ersten Signalisierung an eine zweite Netzwerkvorrichtung in einem Fall, in dem die Verbindungsfortsetzungsanforderung durch eine Endgerätevorrichtung beim Initiieren einer Small Data Transmission, SDT, übertragen wird, ausgelegt ist, wobei die zweite Netzwerkvorrichtung eine Quellbasisstation ist und die erste Signalisierung erste Angabeinformationen und erste Listeninformationen enthält, wobei die ersten Angabeinformationen angeben, dass eine Initiierung der Verbindungsfortsetzungsanforderung durch die Endgerätevorrichtung eine SDT durchführen soll, die ersten Listeninformationen einen durch die erste Netzwerkvorrichtung unterstützten Verschlüsselungs- und/oder Integritätsschutzalgorithmus enthalten und die ersten Angabeinformationen und die ersten Listeninformationen durch die zweite Netzwerkvorrichtung zum Bestimmen, ob eine Benutzerausrüstungskontextmigration, UE-Kontextmigration, durchgeführt werden soll, verwendet werden.

14. Zweite Netzwerkvorrichtung (800), umfassend:
ein zweites Empfangsmodul (810), das zum Empfangen einer ersten Signalisierung von einer ersten Netzwerkvorrichtung ausgelegt ist, wobei die erste Netzwerkvorrichtung eine Zielbasisstation ist und die zweite Netzwerkvorrichtung eine Quellbasisstation ist;
ein Beurteilungsmodul (820), das zum Beurteilen, ob die erste Signalisierung erste Angabeinformationen und erste Listeninformationen enthält, ausgelegt ist, wobei die ersten Angabeinformationen angeben, dass eine Initiierung einer Verbindungsfortsetzungsanforderung durch die Endgerätevorrichtung eine Small Data Transmission, SDT, durchführen soll, die ersten Listeninformationen einen durch die erste Netzwerkvorrichtung unterstützten Verschlüsselungs- und/oder Integritätsschutzalgorithmus enthalten und die ersten Angabeinformationen und die ersten Listeninformationen durch die zweite Netzwerkvorrichtung zum Bestimmen, ob eine Benutzerausrüstungskontextmigration, UE-Kontextmigration, durchgeführt werden soll, verwendet werden; und
ein Bestimmungsmodul (830), das zum Bestimmen, ob Kontext der Endgerätevorrichtung gemäß einem Bestimmungsergebnis migriert werden soll, ausgelegt ist.

## Revendications

1. Procédé de transmission de signalisation, comprenant :
la réception (S210), par un premier périphérique réseau, d'une demande de reprise de connexion, ce premier périphérique réseau étant une station de base cible : et
la transmission (S220), par le premier périphérique réseau, d'une première signalisation à un deuxième périphérique réseau dans un cas où la demande de reprise de connexion est transmise par un dispositif terminal lorsqu'il lance une transmission de petites données, SDT, le deuxième périphérique réseau étant une station de base source et la première signalisation contenant une première information d'indication et une première liste d'informations, la première information d'indication indiquant que le lancement de la demande de reprise de connexion par le dispositif terminal sert à exécuter une transmission SDT, ce procédé étant **caractérisé par le fait que** la première liste d'informations contient un algorithme de chiffrement et/ou de protection d'intégrité pris en charge par le premier périphérique réseau, et la première information d'indication et la première liste d'informations étant utilisées par le deuxième périphérique réseau afin de déterminer s'il faut ou pas exécuter une migration du contexte de l'équipement utilisateur, UE.

2. Procédé selon la revendication 1, dans lequel
la première information d'indication est acheminée dans un élément d'information, IE, de cause de reprise de commande de ressource radio, RRC ; ou
la première information d'indication est acheminée dans une premier élément IE.

3. Procédé selon l'une quelconque des revendications 1 à 2, dans lequel la première signalisation contient en outre au moins :
soit un identifiant, ID, de contexte du dispositif terminal ;
soit un ID d'une cellule correspondant au premier périphérique réseau.

4. Procédé selon l'une quelconque des revendications 1 à 3, dans lequel
la demande de reprise de connexion contient une identité temporaire de réseau radio inactif, I-RNTI ; et dans lequel
le premier périphérique réseau détermine le deuxième périphérique réseau selon l'identité I-RNTI.

5. Procédé selon l'une quelconque des revendications 1 à 4, dans lequel la réception, par le premier périphérique réseau, de la demande de reprise de connexion, comprend :
La réception, par le premier périphérique réseau, d'un premier message venant du dispositif terminal, ce premier message contenant la demande de reprise de connexion.

6. Procédé pour la migration du contexte d'un dispositif terminal, comprenant :
la réception (S610), par un deuxième périphérique réseau, d'une première signalisation venant d'un premier périphérique réseau, et la détermination, par le deuxième périphérique réseau, de si la première signalisation contient ou pas une première information d'indication et une première liste d'informations, le premier périphérique réseau étant une station de base cible, le deuxième périphérique réseau étant une station de base source, la première information d'indication indiquant que le lancement d'une demande de reprise de connexion par le dispositif terminal sert à exécuter une transmission de petites données, SDT, ce procédé étant **caractérisé par le fait que** la première liste d'informations contient un algorithme de chiffrement et/ou de protection d'intégrité pris en charge par le premier périphérique réseau, et le première information d'indication et la première liste d'informations étant utilisées par le deuxième périphérique réseau afin de déterminer s'il faut ou pas exécuter une migration de contexte de l'équipement utilisateur, UE ; et
la détermination (S620), par le deuxième périphérique réseau, de s'il faut ou pas migrer le contexte du dispositif terminal selon un résultat de détermination.

7. Procédé selon la revendication 6, dans lequel la détermination, par le deuxième périphérique réseau, de s'il faut ou pas migrer le contexte du dispositif terminal selon le résultat de la détermination comprend :
l'omission, par le deuxième périphérique réseau, de la migration du contexte du dispositif terminal à condition que le première signalisation contienne la première information d'indication.

8. Procédé selon la revendication 6, dans lequel la détermination, par le deuxième périphérique réseau, de s'il faut ou pas migrer le contexte du dispositif terminal selon le résultat de la détermination comprend :
la détermination, par le deuxième périphérique réseau, de s'il faut ou pas migrer le contexte du dispositif terminal selon un facteur prédéterminé à condition que la première signalisation ne contienne pas la première information d'indication.

9. Procédé selon la revendication 6, dans lequel la détermination, par le deuxième périphérique réseau, de s'il faut ou pas migrer le contexte du dispositif terminal selon le résultat de la détermination comprend :
l'omission, par le deuxième périphérique réseau, de la migration du contexte du dispositif terminal à condition que les conditions suivantes soient toutes les deux remplies :
la première signalisation contient la première information d'indication ; et
la première liste d'informations ne contient pas d'algorithme de chiffrement et/ou de protection d'intégrité du contexte du dispositif terminal.

10. Procédé selon la revendication 9, dans lequel la détermination, par le deuxième périphérique réseau, de s'il faut ou pas migrer le contexte du dispositif terminal selon le résultat de la détermination comprend en outre :
la détermination, par le deuxième périphérique réseau, de s'il faut ou pas migrer le contexte du dispositif terminal selon un facteur prédéterminé lorsqu'au moins une des conditions suivantes n'est pas remplie :
la première signalisation contient la première information d'indication ; et
la première liste d'informations ne contient pas l'algorithme de chiffrement et/ou de protection d'intégrité du contexte du dispositif terminal.

11. Procédé selon l'une quelconque des revendications 6 à 10, dans lequel
la première information d'indication est acheminée dans un élément d'information, IE, de cause de reprise de commande de ressource radio, RRC ; ou
la première information d'indication est acheminée dans une premier élément IE.

12. Procédé selon l'une quelconque des revendications 6 à 11, dans lequel la première signalisation contient en outre au moins :
soit un identifiant, ID, de contexte du dispositif terminal ;
soit un ID d'une cellule correspondant au premier périphérique réseau.

13. Premier périphérique réseau (700), comprenant :
un premier module de réception (710) configuré de façon à recevoir une demande de reprise de connexion, le premier périphérique réseau étant une station de base cible : et
un premier module de transmission (720) configuré de façon à transmettre une première signalisation à un deuxième périphérique réseau dans un cas où la demande de reprise de connexion est transmise par un dispositif terminal lorsqu'il lance une transmission de petites données, SDT, le deuxième périphérique réseau étant une station de base source et la première signalisation contenant une première information d'indication et une première liste d'informations, la première information d'indication indiquant que le lancement de la demande de reprise de connexion par le dispositif terminal sert à exécuter une transmission SDT, la première liste d'informations contenant un algorithme de chiffrement et/ou de protection d'intégrité pris en charge par le premier périphérique réseau, et la première information d'indication et la première liste d'informations étant utilisées par le deuxième périphérique réseau afin de déterminer s'il faut ou pas exécuter une migration du contexte de l'équipement utilisateur, UE.

14. Deuxième périphérique réseau (800), comprenant :
un deuxième module de réception (810) configuré de façon à recevoir une première signalisation venant d'un premier périphérique réseau, ce premier périphérique réseau étant une station de base cible, et le deuxième périphérique réseau étant une station de base source ;
un module de jugement (820) configuré de façon à juger si la première signalisation contient ou pas une première information d'indication et une première liste d'informations, la première information d'indication indiquant que le lancement d'une demande de reprise de connexion par le dispositif terminal sert à exécuter une transmission de petites données, SDT, la première liste d'informations contenant un algorithme de chiffrement et/ou de protection d'intégrité pris en charge par le premier périphérique réseau, et la première information d'indication et la première liste d'informations étant utilisées par le deuxième périphérique réseau afin de déterminer s'il faut ou pas exécuter une migration du contexte de l'équipement utilisateur, UE ; et
un module de détermination (830), configuré de façon à déterminer s'il faut ou pas migrer le contexte du dispositif terminal selon un résultat de détermination.
